# EUROPEAN PATENT APPLICATION

(11) **EP 3 240 208 A1**
(43) Date of publication of application: **01.11.2017**
(21) Application number: 15871500.3
(22) Date of filing: 18.03.2015
(51) Int. Cl.: H04B 10/07, G02B 6/38

(54) **OPTICAL FIBRE MONITORING METHOD AND APPARATUS AND OPTICAL FIBRE ADAPTER**

(30) Priority: 22.12.2014 CN 201410808784
(71) Applicant: ZTE Corporation, Shenzhen, Guangdong 518057 (CN)
(72) Inventor: GONG, Yu, Shenzhen Guangdong 518057 (CN); HAO, Xiangyong, Shenzhen Guangdong 518057 (CN); BEI, Jinsong, Shenzhen Guangdong 518057 (CN)
(74) Representative: Novagraaf Technologies
(86) International application number: PCT/CN2015/074534
(87) International publication number: WO 2016/101422

(57) **Abstract**

At least some embodiments of disclosure provide a method and device for optical fiber monitoring and an optical fiber adapter. The method includes: a device for monitoring the optical fiber for performing optical fiber monitoring is installed in an optical fiber adapter and the optical fiber monitoring is performed by using the optical fiber adapter with the device for monitoring the optical fiber. The problem that the device for monitoring the optical fiber has complex wiring and a deployment position is limited is solved. And effects that the wiring complexity of the device for monitoring the optical fiber is reduced, and the deployment position is flexible and convenient are achieved.

## Description

### Technical Field

The disclosure relates to communication field, and in particular to a method and device for optical fiber monitoring and an optical fiber adapter.

### Background

Along with depth development of optical fiber network communication, a great number of optical fibers and cables are arranged in an optical fiber communication network. Facing a optical fiber network with so huge number and so many topology frameworks and simultaneously facing massive optical distribution nodes, how to perform efficient, quick and flexible monitoring and maintenance on a whole optical fiber network is no other than a great challenge to a development of the optical fiber network. In order to guarantee a quality of the optical fiber network and improve a satisfaction degree of customers, monitoring to the quality of the optical fiber network becomes more and more important. And in view of this, various devices for monitoring optical fiber network are emerging.

At present, methods and devices for monitoring the optical fiber network are basically divided into two types: a centralized type and a distributed type based on an optical module. For a centralized type monitoring device, centralized deployment is needed such that a device space for a machine frame is occupied, and assorted optical components need to be provided. Moreover, a product density is fixed, the deployment is not flexible enough, a whole wiring is complex, and technical requirements on operation and maintenance staffs are also high. For a distributed type monitoring device based on the optical module, although the assorted optical components can be reduced, and the whole wiring difficulty can be lowered, it is directly related with technologies carried by the optical fiber network and is subject to different optical modules. The optical modules adopted by different technologies are different, and a deployment position is also limited and only can be at a position of a light source. Therefore, the device for monitoring the optical fiber has the complex wiring and the deployment position is limited.

In view of a problem that the device for monitoring the optical fiber has the complex wiring and the deployment position is limited, an effective solution has not been provided yet.

### Summary

At least some embodiments of the disclosure provide a method and device for optical fiber monitoring and an optical fiber adapter, so as at least to partially solve the problem that the device for monitoring the optical fiber has a complex wiring and a deployment position is limited.

In an embodiment of the disclosure, a method for optical fiber monitoring is provided, which includes that: installing a device for monitoring the optical fiber for performing optical fiber monitoring in an optical fiber adapter; and performing the optical fiber monitoring by using the optical fiber adapter with the device for monitoring the optical fiber.

In one embodiment, before performing the optical fiber monitoring by using the optical fiber adapter with the device for monitoring the optical fiber, the method further includes: installing a device for optical fiber monitoring management connected with the device for monitoring the optical fiber, wherein the device for the optical fiber monitoring management and the device for monitoring the optical fiber are connected in a predetermined connection manner.

In one embodiment, performing the optical fiber monitoring by using the optical fiber adapter with the device for monitoring the optical fiber includes: configuring monitoring parameters for the device for monitoring the optical fiber by using the device for the optical fiber monitoring management; sending a monitoring command to the device for monitoring the optical fiber by using the device for the optical fiber monitoring management; receiving a monitoring result, which is sent by the device for monitoring the optical fiber and is obtained after monitoring is performed, according to the monitoring command, on the optical fiber by using the device for the optical fiber monitoring management; and reporting the monitoring result by using the device for the optical fiber monitoring management.

In one embodiment, after reporting the monitoring result by using the device for the optical fiber monitoring management, the method further includes: performing analysis processing on the reported monitoring result; and displaying an analysis result after the analysis processing is performed.

In another embodiment of the disclosure, a device for optical fiber monitoring is provided, including: a first installation component to install a device for monitoring the optical fiber for performing optical fiber monitoring in an optical fiber adapter; and a monitoring component to perform the optical fiber monitoring by using the optical fiber adapter with the device for monitoring the optical fiber.

In one embodiment, the device for monitoring the optical fiber supports at least one of the following functions: a light emitting function, a light receiving function, a signal processing function, and light signal wavelength combining and Wavelength Division Multiplexing (WDM) functions.

In one embodiment, the device further includes: a second installation component to install a device for optical fiber monitoring management device connected with the device for monitoring the optical fiber, wherein the device for the optical fiber monitoring management and the device for monitoring the optical fiber are connected in a predetermined connection manner.

In one embodiment, the monitoring component includes: a configuration element to configure monitoring parameters for the optical fiber monitoring device by using the optical fiber monitoring management device; a sending element to send a monitoring command to the device for monitoring the optical fiber by using the device for the optical fiber monitoring management; a receiving element to receive a monitoring result, which is sent by the device for monitoring the optical fiber and is obtained after monitoring is performed, according to the monitoring command, on the optical fiber by using the device for the optical fiber monitoring management; and a reporting element to report the monitoring result by using the device for the optical fiber monitoring management.

In one embodiment, the device further includes: an analysis element to perform analysis processing on the reported monitoring result; and a display element to display an analysis result after the analysis processing is performed.

In another embodiment of the disclosure, an optical fiber adapter is provided, including the above-mentioned device for monitoring the optical fiber.

By at least some embodiments of the disclosure, a device for monitoring the optical fiber for performing optical fiber monitoring is installed in an optical fiber adapter and the optical fiber monitoring is performed by using the optical fiber adapter with the device for monitoring the optical fiber, so that the problem that the device for monitoring the optical fiber has the complex wiring and the deployment position is limited is solved. And effects that the wiring complexity of the device for monitoring the optical fiber is reduced and the deployment position is flexible and convenient are achieved.

### Brief Description of the Drawings

The drawings are described here to provide further understanding of the disclosure, and form a part of the disclosure. The schematic embodiments and description of the disclosure are adopted to explain the disclosure, and do not form improper limits to the disclosure. In the drawings:
Fig. 1 is a flowchart of a method for optical fiber monitoring according to an embodiment of the disclosure.
Fig. 2 is a structural block diagram of a device for optical fiber monitoring according to an embodiment of the disclosure.
Fig. 3 is a structural block diagram of a device for optical fiber monitoring according to an example embodiment of the disclosure.
Fig. 4 is a structural block diagram of a monitoring component 24 in a device for optical fiber monitoring according to an embodiment of the disclosure.
Fig. 5 is a structural block diagram of a monitoring component 24 according to an example embodiment of the disclosure.
Fig. 6 is a structural diagram of an optical fiber adapter according to an embodiment of the disclosure.
Fig. 7 is a comparison diagram between an optical fiber flange adapter compatible component and a traditional optical fiber flange adapter according to an embodiment of the disclosure.
Fig. 8 is a diagram of an optical fiber monitoring component according to an embodiment of the disclosure.
Fig. 9 is a schematic diagram of an optical fiber flange adapter compatible component having a built-in optical fiber monitoring component according to an embodiment of the disclosure.
Fig. 10 is a diagram of an optical fiber monitoring management component according to an embodiment of the disclosure.
Fig. 11 is a schematic diagram of an optical fiber flange adapter compatible component connected with an optical fiber monitoring management component according to an embodiment of the disclosure.
Fig. 12 is a structural block diagram of a system for optical fiber monitoring according to an embodiment of the disclosure.

### Detailed Description

The disclosure is described below with reference to the drawings and the embodiments in detail. It is important to note that the embodiments of the disclosure and the characteristics in the embodiments can be combined under the condition of no conflicts.

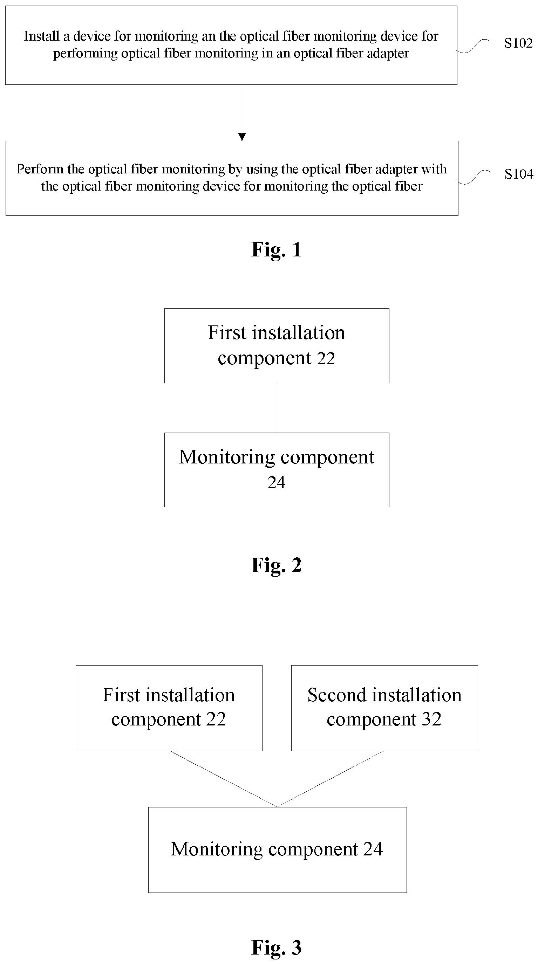

In an embodiment, a method for optical fiber monitoring is provided. Fig. 1 is a flowchart of the method for monitoring the optical fiber according to the embodiment of the disclosure. As shown in Fig. 1, the flowchart includes the following steps:
At Step S102, a device for monitoring the optical fiber for performing optical fiber monitoring is installed in an optical fiber adapter.
At Step S104, the optical fiber monitoring is performed by using the optical fiber adapter with the device for monitoring the optical fiber.

Through above steps, the device for monitoring the optical fiber for performing the optical fiber monitoring is installed in the optical fiber adapter, and the optical fiber monitoring is performed by using the optical fiber adapter with the device for monitoring the optical fiber, so the purpose of performing the monitoring on the optical fiber by using the optical fiber adapter with the device for monitoring the optical fiber is realized, and the flexible, simple and low-cost optical fiber monitoring deployment can be performed along with the optical fiber adapter. Furthermore, the optical fiber adapter is compatible with a traditional optical fiber adapter. The problem that the device for monitoring the optical fiber has the complex wiring and the deployment position is limited is solved. And effects that the wiring complexity of the optical fiber monitoring device is reduced and the deployment position is flexible and convenient are achieved.

In an exemplary embodiment, before performing the optical fiber monitoring by using the optical fiber adapter with the device for monitoring the optical fiber, the method further includes that: a device for optical fiber monitoring management connected with the device for monitoring the optical fiber is installed. The device for the optical fiber monitoring management and the device for monitoring the optical fiber are connected in a predetermined connection manner. By using the optical fiber monitoring management device, the purpose of managing the optical fiber monitoring device is realized.

In an exemplary embodiment, performing the optical fiber monitoring by using the optical fiber adapter with the device for monitoring the optical fiber includes the following steps. Monitoring parameters for the device for monitoring the optical fiber are configured by using the device for the optical fiber monitoring management. A monitoring command is sent to the device for monitoring the optical fiber by using the device for the optical fiber monitoring management. A monitoring result is received, and the monitoring result is sent by the device for monitoring the optical fiber and is obtained after the monitoring is performed, according to the monitoring command, on the optical fiber by using the device for optical fiber monitoring management. The monitoring result is reported by using the device for optical fiber monitoring management. And thus, the monitoring on the optical fiber is realized.

In an exemplary embodiment, after reporting the monitoring result by using the optical fiber monitoring management device, the method further includes the following steps. Analysis processing is performed on the reported monitoring result. An analysis result is displayed after the analysis processing is performed. And thus, the quality of the optical fiber is determined intuitively.

In another embodiment, a device for monitoring the optical fiber is further provided. The device is arranged to implement above embodiments and exemplary description, which has been explained and will not be repeated again. For example, a term "component" hereinafter may be a combination of at least one of software and hardware for implementing a predetermined function. Although the device described in the following embodiments is implemented by the software, the implementation with the hardware or the combination of the software and the hardware is also possible and is conceived.

Fig. 2 is a structural block diagram of a device for optical fiber monitoring according to an embodiment of the disclosure. As shown in Fig. 2, the device includes a first installation component 22 and a monitoring component 24. And the device will be described as follows.

The first installation component 22 is arranged to install a device for monitoring the optical fiber for performing optical fiber monitoring in an optical fiber adapter; and the monitoring component 24 is connected with the first installation component 22 and is arranged to perform the optical fiber monitoring by using the optical fiber adapter with the device for monitoring the optical fiber.

The device for monitoring the optical fiber supports at least one of the following functions: a light emitting function, a light receiving function, a signal processing function, and light signal wavelength combining and WDM functions.

Fig. 3 is a structural diagram of a device for optical fiber monitoring according to an example embodiment of the disclosure. As shown in Fig. 3, besides all components shown in Fig. 2, the device further includes a second installation component 32. And the second installation component 32 will be described as follows.

The second installation component 32 is connected with the monitoring component 24, and is arranged to install a device for monitoring optical fiber monitoring management connected with the device for monitoring the optical fiber. The device for the optical fiber monitoring management and the device for monitoring the optical fiber are connected in a predetermined connection manner.

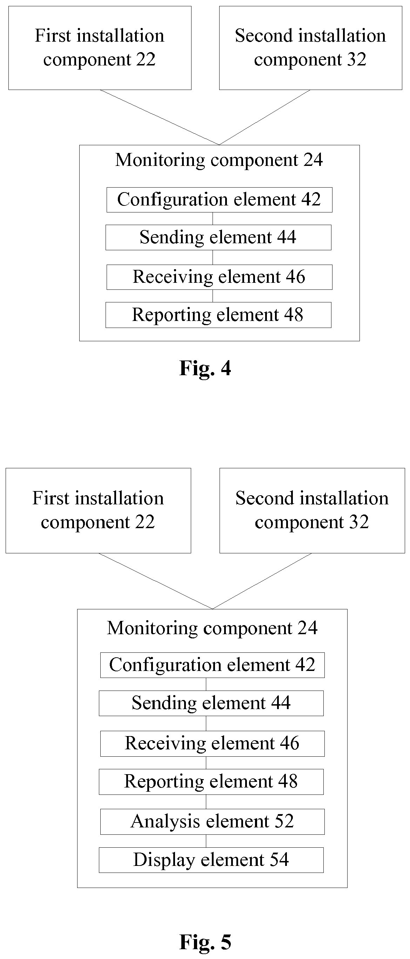

Fig. 4 is a structural diagram of a monitoring component 24 in a device for optical fiber monitoring according to an embodiment of the disclosure. As shown in Fig. 4, the monitoring component 24 includes a configuration element 42, a sending element 44, a receiving element 46 and a reporting element 48. The monitoring component 24 will be described as follows.

The configuration element 42 is arranged to configure monitoring parameters for the device for monitoring the optical fiber by using the device for the optical fiber monitoring management. The sending element 44 is connected with the configuration element 42 and is arranged to send a monitoring command to the device for monitoring the optical fiber by using the device for the optical fiber monitoring management. The receiving element 46 is connected with the sending element 44 and is arranged to receive a monitoring result, which is sent by the device for monitoring the optical fiber and is obtained after monitoring is performed, according to the monitoring command, on the optical fiber by using the device for the optical fiber monitoring management. The reporting element 48 is connected with the receiving element 46 and is arranged to report the monitoring result by using the device for the optical fiber monitoring management.

Fig. 5 is a structural block diagram of a monitoring component 24 according to an example embodiment of the disclosure. As shown in Fig. 5, besides all elements shown in Fig. 4, the monitoring component 24 further includes an analysis element 52 and a display element 54. The monitoring component 24 will be described as follows.

The analysis element 52 is connected with the reporting element 48 and is arranged to perform analysis processing on the reported monitoring result. The display element 54 is connected with the analysis element 52 and is arranged to display an analysis result after the analysis processing is performed.

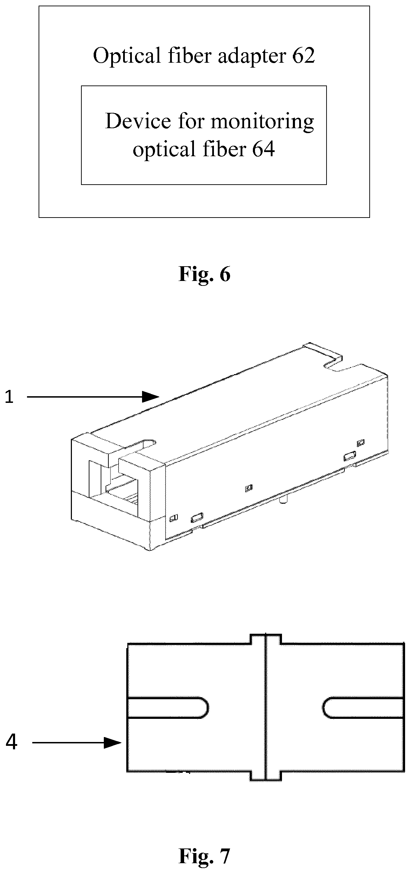

Fig. 6 is a structural block diagram of an optical fiber adapter according to an embodiment of the disclosure. As shown in Fig. 6, the optical fiber adapter 62 includes the device for monitoring the optical fiber 64 in at least some above-mentioned embodiments.

The disclosure will be described as follows by taking an optical fiber flange adapter as an example.

In view of defects of a centralized type device and a distributed type optical fiber monitoring device based on the optical module, a distributed type optical fiber monitoring method and device based on an optical fiber adapter can solve the problems well. The optical fiber adapter includes various adapters such as SC, FC, LC and the like, and is an optical distribution node device most used in a whole optical fiber network. The optical fiber adapter is thoroughly independent of technologies carried by the optical fiber network, and is applicable to all optical fiber networks. The distributed type optical fiber monitoring method and device based on the optical fiber adapter may be deployed at any node of the optical fiber network along with the flange adapter. The deployment density is unlimited and is expanded at any time, the network deployment is flexible, the original optical fiber network is not increased and affected. It is unnecessary to additionally occupy a machine frame space and to deploy extra optical components. Thus, it can be seen that the distributed type optical fiber monitoring method and device based on the optical fiber adapter have the advantages over the centralized type optical fiber monitoring and the optical module based optical fiber monitoring and has very good deployment prospect. The distributed type optical fiber monitoring method and device based on the optical fiber adapter are of great significance to monitor the optical fiber network, and will be described as follows in detail.

In an embodiment of the disclosure, the distributed type optical fiber monitoring device based on the optical fiber flange adapter includes the following components: an optical fiber monitoring component, which is equivalent to the device for optical fiber monitoring, and an optical fiber monitoring management component, which is equivalent to the device for optical fiber monitoring management. And the distributed type optical fiber monitoring device further includes an optical fiber flange adapter compatible component, which is equivalent to the optical fiber adapter.

A relationship among the optical fiber flange adapter compatible component, the optical fiber monitoring component and the optical fiber monitoring management component is as follows.

The optical fiber monitoring component is built in the optical fiber flange adapter compatible component, and implements monitoring on an optical fiber network. The optical fiber flange adapter compatible component is thoroughly compatible with the traditional flange adapter, and is installed at any original distribution node where the traditional optical fiber flange adapter may be installed, including but not limited to a distribution board, a splice and distribution integrated board, an adapter mounting bar, etc. The optical fiber monitoring management component, which is connected with the optical fiber monitoring component, implements the management on the optical fiber monitoring component, including configuring monitoring parameters, sending a configuration template, sending a monitoring command, reading monitoring result data and uploading an optical fiber monitoring result, etc.

Furthermore, the optical fiber flange adapter compatible component in the embodiment of the disclosure is thoroughly compatible with the traditional optical fiber adapter in a structure, is installed on any flange adapter mounting seat and simultaneously has all functions of the optical fiber flange adapter, thereby implementing patching and conducting functions of an optical fiber routing. Besides, compared with the traditional flange adapter, the optical fiber flange adapter compatible component has a larger internal space where the optical fiber monitoring component is installed. And simultaneously the optical fiber flange adapter compatible component has a special connection component for implementing the connection between the optical fiber monitoring component inside and the optical fiber monitoring management component outside. These two characteristics are the maximum difference points of the optical fiber flange adapter compatible component different from the traditional flange adapter. In one embodiment of the disclosure, the optical fiber monitoring component has a complete set of optical fiber monitoring functions including light emitting, light receiving, signal processing, light signal wavelength combining and WDM, etc., and implements the capabilities not limited to optical fiber breaking monitoring, optical fiber attenuation monitoring, optical fiber parameter monitoring and light path return loss monitoring, etc. The optical fiber monitoring management component in the embodiment of the disclosure implements the complete optical fiber monitoring management functions, including but not limited to configuring the optical fiber monitoring parameters, sending the configuration template, sending the monitoring command and reading the monitoring data, etc. And the optical fiber monitoring management component also implements to upload the optical fiber monitoring result data to an upper level system, such as an expert system or an Operation Support System (OSS). The optical fiber monitoring component built in the optical fiber flange adapter compatible component performs flexible, simple and low-cost optical fiber monitoring deployment along with the optical fiber flange adapter.

In an embodiment of the disclosure, the distributed type optical fiber monitoring method based on the optical fiber flange adapter includes the following steps.

At Step 1, an optical fiber monitoring component is an integrated optical fiber monitoring system. The optical fiber monitoring component includes a complete set of light paths and circuits for performing optical fiber monitoring, including light emitting, light receiving, signal processing, light signal wavelength combining and WDM, etc. And the optical fiber monitoring component can implement the capabilities not limited to optical fiber breaking monitoring, optical fiber attenuation monitoring, optical fiber parameter monitoring and light path return loss monitoring, etc. The optical fiber monitoring component has the characteristics of small size and small power consumption. In the disclosure, the optical fiber monitoring component is installed in an optical fiber flange adapter compatible component.

At Step 2, the optical fiber flange adapter compatible component where the optical fiber monitoring component has been built in is installed at any adapter node of an optical fiber network, including but not limited to a fiber distribution board, a splice and distribution integrated board, an adapter strip and the like. The optical fiber flange adapter compatible component can implement optical distribution and light path disconnection functions of the traditional optical fiber flange adapter. The optical fiber flange adapter compatible component simultaneously is installed with the matched optical fiber monitoring component in a built-in manner and provides an external connection component for the optical fiber monitoring component. In the optical fiber flange adapter compatible component, the optical fiber monitoring component implements optical fiber monitoring and light signal wavelength combination to a business wavelength originally through a flange plate. And on the premise of not interrupting business work, the optical fiber monitoring component implements the monitoring on the optical fiber network.

At Step 3, the optical fiber monitoring component, which is connected with the optical fiber flange adapter compatible component, finishes connection and communication with the optical fiber monitoring management component in any manner. The optical fiber monitoring management component implements a management function on the optical fiber monitoring component, including configuring optical fiber monitoring parameters, sending a configuration template, sending a monitoring command and reading monitoring data, etc. And the optical fiber monitoring management component simultaneously implements to upload optical fiber monitoring result data to an upper-level system, such as an expert system or an OSS.

In view of this, the optical fiber monitoring component, through being adaptive in the optical fiber flange adapter compatible component, implements distributed type optical fiber network monitoring at an installation position of any adapter in the optical fiber network, and adjusts a monitoring strategy and upload a result in real time via the optical fiber monitoring management component. And thus, the intelligent, real-time and accurate optical fiber network monitoring is realized.

Taking an SC type optical fiber flange adapter as an example, the embodiment of the disclosure is further described below with reference to the drawings:

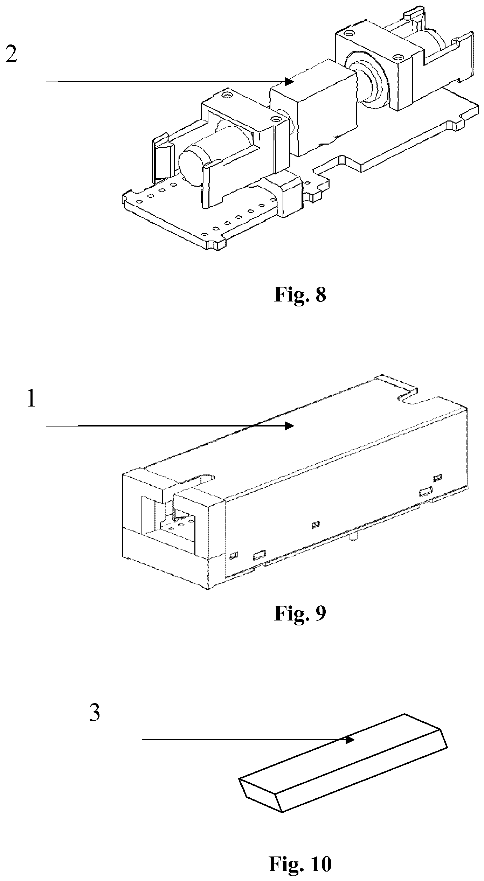

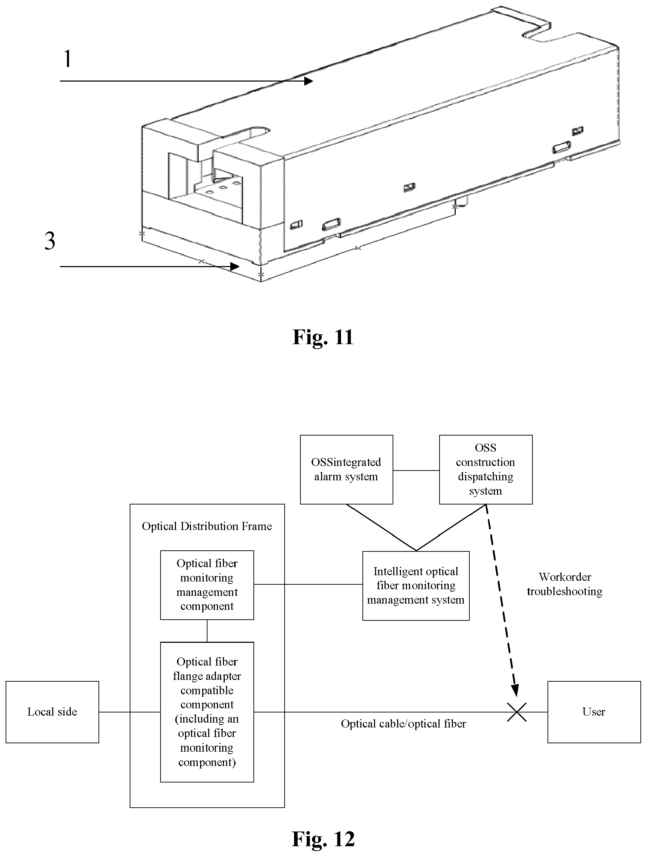

Fig. 7 is a comparison diagram between an optical fiber flange adapter compatible component and a traditional optical fiber flange adapter according to an embodiment of the disclosure. Fig. 8 is a diagram of an optical fiber monitoring component according to an embodiment of the disclosure. Fig. 9 is a schematic diagram of an optical fiber flange adapter compatible component having a built-in optical fiber monitoring component according to an embodiment of the disclosure. Fig. 10 is a diagram of an optical fiber monitoring management component according to an embodiment of the disclosure. Fig. 11 is a schematic diagram of an optical fiber flange adapter compatible component connected with an optical fiber monitoring management component according to an embodiment of the disclosure.

The optical fiber flange adapter compatible component 1 shown in Fig. 7 intrinsically has functions of an optical fiber flange adapter, thereby finishing light path disconnection and optical distribution functions. The optical fiber flange adapter compatible component 1 may be installed at an installation position of any adapter in an optical fiber network, including but not limited to a fiber distribution board, a splice and distribution integrated board, an adapter strip and the like. Compared with the traditional flange adapter 4, the optical fiber flange adapter compatible component 1 has a larger size and is convenient to build in an optical fiber monitoring component. And meanwhile, the optical fiber flange adapter compatible component 1 includes a connection component for connecting the optical fiber monitoring component 2 in Fig. 8 and an optical fiber monitoring management component 3 in Fig. 10.

As shown in Fig. 9, in the embodiment, an optical fiber monitoring component 2 is built in an optical fiber flange adapter compatible component 1. The optical fiber monitoring component 2 not only has a monitoring function for an optical fiber light path, but also implements a wavelength combination for an optical fiber monitoring wavelength and an optical fiber service wavelength, thereby implementing online optical fiber monitoring on a business. The optical fiber flange adapter compatible component 1 where the optical fiber monitoring component 2 is built in is installed in the optical fiber network freely along with an installation position of the adapter, thereby implementing the distributed type optical fiber monitoring.

Besides the optical fiber monitoring component in itself, the optical fiber monitoring is also essential to manage the optical fiber monitoring component. In this sense, it is necessary to design an optical fiber monitoring management component 3. The optical fiber flange adapter compatible component 1 having the built-in optical fiber monitoring component 2 is installed and connected with the optical fiber monitoring management component 3, as shown in Fig. 11. Therefore, the optical fiber monitoring management component implements the management on the optical fiber monitoring component, including configuring optical fiber monitoring parameters, sending a configuration template, sending a monitoring command and realizing monitoring data, etc. And the optical fiber monitoring management component simultaneously implements to upload optical fiber monitoring result data to an upper-level system, such as an expert system or an OSS.

Taking a typical application scene in a whole optical fiber monitoring system as an example, the embodiment of the disclosure is further described below:
Fig. 12 is a structural block diagram of a system for optical fiber monitoring according to an embodiment of the disclosure. And the embodiment of the disclosure is further described below with reference to the Fig. 12:
   1. An optical fiber flange adapter compatible component having a built-in optical fiber monitoring component is installed on an Optical Distribution Frame (hereinafter referred to as ODF).
   2. The optical fiber flange adapter compatible component is connected with the optical fiber monitoring component in a predetermined connection manner. An optical fiber monitoring management component is connected with an intelligent optical fiber monitoring management system and an upper-level OSS system in a special manner.
   3. An optical cable or optical fiber between a local side and a user side is connected via the optical fiber flange adapter compatible component.
   4. When a fault occurs in the optical cable or optical fiber, the optical fiber monitoring component monitors fault information and reports the fault information to the optical fiber monitoring management component. And the optical fiber monitoring management component uploads the fault information to the intelligent optical fiber monitoring management system.
   5. The intelligent optical fiber monitoring management system uploads a fault alarm to an OSS integrated alarm system and is set to send an alarm.
   6. Furthermore, the intelligent optical fiber monitoring management system analyzes a fault cause and provides a solution, and then informs an OSS construction dispatching system of the fault cause and the solution. The OSS construction dispatching system sends a command to the operation and maintenance staffs in the form of a workorder for on-site workorder troubleshooting, thereby finishing the fault repairing.

For the optical fiber flange adapters of other types such as FC, LC and ST, etc., the distributed type optical fiber monitoring method and device based on the optical fiber flange adapter in the embodiments of the disclosure are also applicable.

Obviously, those skilled in the art should know that each component or step of the embodiments of the disclosure can be implemented by a universal computing device. And the components or steps can be concentrated on a single computing device or distributed on a network formed by a plurality of computing devices, and can optionally be implemented by programmable codes executable for the computing devices, so that the components or steps can be stored in a storage device for execution with the computing devices, and the shown or described steps can be executed in a sequence different from here in some cases, or can form each integrated circuit component, or multiple components or steps therein can form a single integrated circuit component for implementation. As a consequence, the disclosure is not limited to any specific hardware and software combination.

The above are exemplary embodiments of the disclosure and not intended to limit the disclosure, and for the technician of the field, the disclosure can have various modifications and variations. Any modifications, equivalent replacements, improvements and the like as claimed in the claims of the disclosure shall fall within the scope of protection as defined in the appended claims of the disclosure.

### Industrial Applicability

To sum up, a method and device for optical fiber monitoring and an optical fiber adapter provided by at least some embodiments of the disclosure have the following beneficial effects: the problem that the device for monitoring the optical fiber has complex wiring and a deployment position is limited is solved, so that the wiring complexity of the device for monitoring the optical fiber is reduced, and the deployment position is flexible and convenient are achieved.

## Claims

1. A method for optical fiber monitoring, comprising:
installing a device for monitoring the optical fiber for performing optical fiber monitoring in an optical fiber adapter; and
performing the optical fiber monitoring by using the optical fiber adapter with the device for monitoring the optical fiber.

2. The method as claimed in claim 1, wherein before performing the optical fiber monitoring by using the optical fiber adapter with the device for monitoring the optical fiber, the method further comprises:
installing a device for optical fiber monitoring management connected with the device for monitoring the optical fiber, wherein the device for the optical fiber monitoring management and the device for monitoring the optical fiber are connected in a predetermined connection manner.

3. The method as claimed in claim 2, wherein performing the optical fiber monitoring by using the optical fiber adapter with the device for monitoring the optical fiber comprises:
configuring monitoring parameters for the device for monitoring the optical fiber by using the device for the optical fiber monitoring management;
sending a monitoring command to the device for monitoring the optical fiber by using the device for the optical fiber monitoring management;
receiving a monitoring result, which is sent by the device for monitoring the optical fiber and is obtained after monitoring is performed, according to the monitoring command, on the optical fiber by using the device for the optical fiber monitoring management; and
reporting the monitoring result by using the device for the optical fiber monitoring management.

4. The method as claimed in claim 3, wherein after reporting the monitoring result by using the device for the optical fiber monitoring management, the method further comprises:
performing analysis processing on the reported monitoring result; and
displaying an analysis result after the analysis processing is performed.

5. A device for optical fiber monitoring, comprising:
a first installation component to install a device for monitoring the optical fiber for performing optical fiber monitoring in an optical fiber adapter; and
a monitoring component to perform the optical fiber monitoring by using the optical fiber adapter with the device for monitoring the optical fiber.

6. The device as claimed in claim 5, wherein the device for monitoring the optical fiber supports at least one of the following functions:
a light emitting function, a light receiving function, a signal processing function, and light signal wavelength combining and Wavelength Division Multiplexing (WDM) functions.

7. The device as claimed in claim 5, further comprising:
a second installation component to install a device for optical fiber monitoring management device connected with the device for monitoring the optical fiber, wherein the device for the optical fiber monitoring management and the device for monitoring the optical fiber are connected in a predetermined connection manner.

8. The device as claimed in claim 7, wherein the monitoring component comprises: a configuration element to configure monitoring parameters for the device for monitoring the optical fiber by using the device for the optical fiber monitoring management;
a sending element to send a monitoring command to the device for monitoring the optical fiber by using the device for the optical fiber monitoring management;
a receiving element to receive a monitoring result, which is sent by the device for monitoring the optical fiber and is obtained after monitoring is performed, according to the monitoring command, on the optical fiber by using the device for the optical fiber monitoring management; and
a reporting element to report the monitoring result by using the device for the optical fiber monitoring management.

9. The device as claimed in claim 8, further comprising:
an analysis element to perform analysis processing on the reported monitoring result; and
a display element to display an analysis result after the analysis processing is performed.

10. An optical fiber adapter, comprising the device as claimed in any one of claims 5-9.
